# EUROPEAN PATENT APPLICATION

(11) **EP 4 797 072 A1**
(43) Date of publication of application: **26.08.2026**
(21) Application number: 25178632.3
(22) Date of filing: 23.05.2025
(51) Int. Cl.: G06F 8/33, G06N 3/00

(54) **SYSTEMS AND METHODS FOR CONTEXT-AWARE ATTACHMENTS AND LARGE LANGUAGE MODEL ANALYSES**

(30) Priority: 20.02.2025 US 202563761039 P; 13.05.2025 US 202519206549
(71) Applicant: Palantir Technologies Inc., Aventura, Florida 33180 (US)
(72) Inventor: KINDBLOM, Marie, Denver, 80202 (US); BERNASCONI, Lorenzo James, Denver, 80202 (US); COPES, Martin, Denver, 80202 (US); SU, Emily, Denver, 80202 (US); LABADIE, Thomas Henri, Denver, 80202 (US)
(74) Representative: Jolliffe, Jack Louis

(57) **Abstract**

Systems and methods for context-aware attachments and large language model (LLM) analyses. An example method includes presenting an assistant application and a development application in a browser, the applications being in communication with a back-end system. Communications are established between the applications using a communication channel. A user prompt and indication of context to be included in an LLM prompt are obtained, with the user prompt and indication of context being routed to the back-end system and the indication of context being specified based on attachment of a repository, a code file being edited in the development application, or a portion of the code file selected in the development application. A response from an LLM is triggered and the response is presented in the assistant application.

## Description

### CROSS-REFERENCE TO RELATED APPLICATIONS

This application claims priority to U.S. Prov. Patent App. No. 63/761039 titled "SYSTEMS AND METHODS FOR CONTEXT-AWARE ATTACHMENTS AND LARGE LANGUAGE MODEL (LLM) ANALYSES" and filed on February 20, 2025. The entire disclosure of each of the above items is hereby made part of this specification as if set forth fully herein and incorporated by reference for all purposes, for all that it contains.

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for data integration, analysis, and visualization. More specifically, the present disclosure relates to context-aware attachments for use with natural language processing.

### BACKGROUND

Integrated development environments (IDE) provide holistic platforms to develop code files for projects of any size. For example, an IDE may combine a source-code editor, typically with full file access tools, with build automation tools and a debugger. Certain IDEs may be run across computing platforms using cross-platform frameworks. For example, some IDEs are built using web technologies and may be rendered using web browsers.

Large language models (LLMs) are increasingly being leveraged by developers to create, and refine, code. LLMs are machine learning models designed for natural language processing tasks and may be inferenced based on input of user questions related to specific code or coding tasks.

### SUMMARY

Embodiments of the present disclosure relate to methods, systems, and computer storage media. An example method includes causing presentation, via an assistant web application and a development web application executing in a browser, of a first window and a second window, the assistant web application and the development web application being in communication with a back-end system; establishing communications, via a communication channel, between the assistant web application and the development web application, the communication channel identifying interactions with the development web application; obtaining, via the assistant web application, a user prompt and an indication of context to be included in a large language model (LLM) prompt, wherein the user prompt and indication of context is routed to the back-end system, wherein the indication of context is specified based on user input provided to the first window reflecting attachment of one or more of a repository, a code file accessible in the second window, or a portion of the code file, wherein the back-end system is in communication with an LLM, wherein the back-end system obtains the code associated with the attachment, and wherein the back-end system forms the LLM prompt based on the user prompt, the obtained code, and metadata determined by the back-end system; and triggering a response from the LLM and updating the first window to reflect the response.

An example computer readable storage media stores instructions that when executed by one or more processors, cause the processors to perform operations. The operations include causing presentation, via an assistant web application and a development web application executing in a browser, of a first window and a second window, the assistant web application and the development web application being in communication with a back-end system; establishing communications, via a communication channel, between the assistant web application and the development web application, the communication channel identifying interactions with the development web application; obtaining, via the assistant web application, a user prompt and an indication of context to be included in a large language model (LLM) prompt, wherein the user prompt and indication of context is routed to the back-end system, wherein the indication of context is specified based on user input provided to the first window reflecting attachment of one or more of a repository, a code file accessible in the second window, or a portion of the code file, wherein the back-end system is in communication with an LLM, wherein the back-end system obtains the code associated with the attachment, and wherein the back-end system forms the LLM prompt based on the user prompt, the obtained code, and metadata determined by the back-end system; and triggering a response from the LLM and updating the first window to reflect the response.

Another example method includes obtaining, from a user device, a user prompt and an indication of context, wherein the system executes back-end functionality associated with an assistant web application and a development web application, wherein the user device presents front-ends associated with the assistant web application and the development web application, wherein the user prompt reflects a question provided to the assistant web application and wherein the indication of context reflects attachment of a repository, a code file being viewed via the development application, or a portion of the code file; determining metadata associated with the context, wherein the system obtains code associated with the indication of context and determines metadata based on the obtained code; forming a large language model (LLM) prompt based on the user prompt, obtained code, and determined metadata, wherein the LLM prompt is provided to an LLM; and routing output from the LLM to the user device for inclusion in the front end associated with the assistant web application.

Accordingly, in various embodiments, large amounts of data are automatically and dynamically calculated interactively in response to user inputs, and the calculated data is efficiently and compactly presented to a user by the system. Thus, in some embodiments, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that the design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interfaces described herein may provide an optimized display of time-varying report-related information and may enable a user to more quickly access, navigate, assess, and digest such information than previous systems.

In some embodiments, data may be presented in graphical representations, such as visual representations, such as charts and graphs, where appropriate, to allow the user to comfortably review the large amount of data and to take advantage of humans' particularly strong pattern recognition abilities related to visual stimuli. In some embodiments, the system may present aggregate quantities, such as totals, counts, and averages. The system may also utilize the information to interpolate or extrapolate, e.g. forecast, future developments.

Further, the interactive and dynamic user interfaces described herein are enabled by innovations in efficient interactions between the user interfaces and underlying systems and components. For example, disclosed herein are improved methods of receiving user inputs, translation and delivery of those inputs to various system components, automatic and dynamic execution of complex processes in response to the input delivery, automatic interaction among various components and processes of the system, and automatic and dynamic updating of the user interfaces. The interactions and presentation of data via the interactive user interfaces described herein may accordingly provide cognitive and ergonomic efficiencies and advantages over previous systems.

Various embodiments of the present disclosure provide improvements to various technologies and technological fields. For example, as described above, existing data storage and processing technology (including, e.g., in memory databases) is limited in various ways (e.g., manual data review is slow, costly, and less detailed; data is too voluminous; etc.), and various embodiments of the disclosure provide significant improvements over such technology. Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, and presentation of the updates to displayed images via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with, and presentation of, various types of electronic data.

Additional embodiments of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

Figure 1A is a block diagram of an example user device executing an assistant application and development application in communication with a back-end system and large language model (LLM).
Figure 1B is a block diagram illustrating a data management system for use with a back-end system, according to some embodiments of the present disclosure.
Figure 2 illustrates one embodiment of a database system using an ontology.
Figure 3A is a block diagram illustrating detail of the example user device providing code input and a user prompt to the back-end system.
Figure 3B is a block diagram illustrating detail of the example back-end system forming an LLM prompt.
Figure 3C illustrates an example user interface associated with a response from the LLM based on the LLM prompt.
Figure 4 is a flowchart of an example process for a user device triggering a response from an LLM associated with a context-aware attachment.
Figure 5 is a flowchart of an example process for a back-end system routing output associated with a context-aware attachment from an LLM to a user device.
Figures 6A-6C illustrate example user interfaces according to the techniques described herein.
Figure 7 illustrates a computer system with which certain methods discussed herein may be implemented.

### DETAILED DESCRIPTION

### Overview

The present application describes an enhanced development environment in which an assistant application may automatically, or based on a user action, obtain contextual-attachments associated with a development application. The assistant application may represent, in some embodiments, a front-end associated with a large language model (LLM). The development application may represent a code editor, or integrated development environment (IDE), in which a user is reviewing, revising, executing, and so on, code. In some embodiments, the assistant application and development application may reflect web applications which are accessed using a web browser. For example, the assistant application and development application may have respective front-ends presented via the web browser while back-end system(s) may implement back-end functionality.

As will be described, a contextual-attachment may reflect information pushed to, or otherwise provided to, the assistant application based on the development application. For example, a user may select a portion of code (e.g., particular lines of code) and the assistant application may automatically receive, or otherwise indicate accessibility of, the portion of code. In this example, the user may provide a question related to the portion of code and the LLM may receive a prompt formed from, at least, the question and portion of code. The user may add the portion code of as a contextual attachment, such that the LLM may have portion included in the prompt. A contextual-attachment may include, in some embodiments, a portion of a code file, all, or substantially all, of a code file, a code repository, and so on.

A contextual-attachment may additionally include arbitrary information, including arbitrary text, which is relevant to a portion of code. For example, a contextual-attachment may include text associated with a note taking application. As another example, a contextual-attachment may include information (e.g., configuration information) associated with a portion of code. As one example, the portion of code may be associated with configuration of a widget. For this example, the contextual-attachment may include information defining, or informing, the configuration of the widget. Additional contextual-attachments, and as will be described, may relate to ontology information associated with a define model (e.g., metadata information).

Advantageously, the disclosed technology may supplement the contextual-attachment. For example, in some embodiments a back-end system may determine metadata associated with a contextual-attachment. In this example, the metadata may reflect additional information which the LLM may leverage to respond to a question. For example, a portion of code may reference a function which is not defined in a current code file. In this example, the back-end system may obtain a header file, a file illustrating implementation details or examples, written materials, and so on, which are relevant to the function.

In some embodiments, an ontology may be used to define a data model for storage of data. As described below, the ontology may include definitions of data object types and associated property types. As one example, an example object may include a person object. For this example, the associated property types may reflect property types related to a person. The development application described herein may enable complex operations to be performed using data objects, such as transforms between object types, complex analyses on disparate object types, and so on.

With respect to a contextual attachment, the assistant application may access, or otherwise receive, metadata associated with the ontology. For example, a user may be implementing code to manipulate objects associated with individual object types. In this example, the metadata may include the ontology which is specific to these individual object types. In this way, the LLM may understand, as an example, whether the implementation code is correct or should be adjusted.

Metadata may additionally include information defining datasets, such as the particular columns included in, or that form, a dataset. As an example, a user may be implementing code that inputs one or more datasets (e.g., by reference) and includes transformation logic that results in an output dataset. For this example, the assistant application may receive metadata that defines the specific columns included in the relevant datasets. As one example, the LLM may determine that the transformation logic is incorrect (e.g., the LLM may determine that the output dataset lacks a particular column or improperly uses one of the input datasets).

In this way, a user may rapidly ask questions using the assistant application while, for example, the back-end obtains relevant input information to enable accurate responses to the questions. For example, the input information may include a portion of code, a code file, a repository, metadata, and so on, as described herein. Advantageously, the assistant application may update in substantially real-time based on user actions with respect to the development application. As an example, as the user selects a portion of code the assistant application may update a front-end to identify the portion of code (e.g., file name, line numbers, and so on). Upon indication of a question in the assistant application, relevant metadata may be automatically provided to the LLM for use in responding.

As described above, the assistant application and development application may represent web applications executing on a browser. Thus, the browser may present corresponding front-ends of the web applications. The browser, as an example, may additionally execute these web applications as respective processes. In some embodiments, a communication channel may be established between the front-ends (e.g., client-side processes). In this way, the assistant application may receive information indicating a context-aware attachment (e.g., from the development application).

With respect to communications between the front-end web applications, in some embodiments the assistant application may receive communication information (e.g., messages) from the development application (e.g., as a push). For example, the assistant application may subscribe to messages from the development application. An example message may identify a specific code file or portion thereof. For example, the message may include information sufficient to enable a back-end associated with the assistant application to obtain the specific code file or portion thereof. An example message may additionally include the specific code file or portion thereof. For example, as a user selects a portion of code (e.g., highlights specific lines) the development application may generate message(s) indicating the specific lines. In this example, the development application may additionally route the specific lines, and optionally code file, to the assistant application.

Different techniques to establish a communication channel may be used and fall within the disclosure herein. For example, a broadcast channel may be established. As another example, web socket(s) may be used. As another example, innovative message passing schemes may be used such as described in U.S. Prov. Patent App. No. 63/750692 which is incorporated herein by reference in its entirety.

The disclosed technology therefore improves upon prior development environments and substantially increases an ease at which a developer or user can leverage an LLM. Additionally, prior development environments lacked the ability to surface relevant metadata, for example relevant to an ontology. The present disclosure allows integration between an LLM supported assistant web application and a development web application that allows data to be efficiently shared between the applications to provide data in the web application as inputs to the LLM of the assistant web application.

In order to facilitate an understanding of the systems and methods discussed herein, a number of terms are defined below. The terms defined below, as well as other terms used herein, should be construed to include the provided definitions, the ordinary and customary meaning of the terms, and/or any other implied meaning for the respective terms. Thus, the definitions below do not limit the meaning of these terms, but only provide exemplary definitions.

An Ontology can include stored information that provides a data model for storage of data in one or more databases and/or other data stores. For example, the stored data may include definitions for data object types and respective associated properties. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions or indications of associated functions associated with data object types. These functions may be executed when a data object of the associated type is accessed. An ontology may constitute a way to represent things in the world. An organization may use an ontology to model a view on what objects exist in the world, what their properties are, and how they are related to each other. An ontology may be user-defined, computer-defined, or some combination of the two. An ontology may include hierarchical relationships among data object types. An organization may use an ontology to model a view of, or provide a template for, what objects exist in the world, what their properties are, and how they are related to each other.

A Data Store is any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A Database or Data Set is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example. The data source(s) can include one or more ontologies, one or more rendering specifications, one or more data objects of the data object types and their associated properties and/or relationships, one or more renderables generated based on the rendering specifications, one or more configurations for front-end applications, one or more mapping libraries for the front-end applications, one or more stored user inputs or requests, one or more visualizations of the geospatial maps, one or more functions associated with the front-end applications, one or more function executors, and one or more application programming interfaces (APIs). The one or more ontologies can include, but are not limited to, definitions for the data object types, definitions for property types of the data object types, relationship types of the data object types, and associations between the data object types and the rendering specifications to provide a desired rendering behavior when rendering data objects of the data object type.

A Data Object (or "Object" or "Data Object Instance") is a data container for information representing a specific thing in the world that has a number of definable properties. For example, a data object can represent a machine learning model. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

An Object Type is a type of a data object (e.g., Person, Event, or Document). Object types may be defined by an ontology and may be modified or updated to include additional object types. An object definition (e.g., in an ontology) may include how the object is related to other objects, such as being a sub-object type of another object type (e.g. an agent may be a sub-object type of a person object type), and the properties the object type may have.

Properties can be attributes of a data object that represent individual data items. At a minimum, each property of a data object has a property type and a value or values.

A Property Type can be the type of data a property is, such as a string, an integer, or a double. Property types may include complex property types, such as a series data values associated with timed ticks (e.g. a time series), etc.

A Property Value can be the value associated with a property, which is of the type indicated in the property type associated with the property. A property may have multiple values.

A Link can be a connection between two data objects, based on, for example, a relationship, an event, and/or matching properties. Links may be directional, such as one representing a payment from person A to B, or bidirectional.

A Link Set can be a set of multiple links that are shared between two or more data objects.

### Block Diagrams

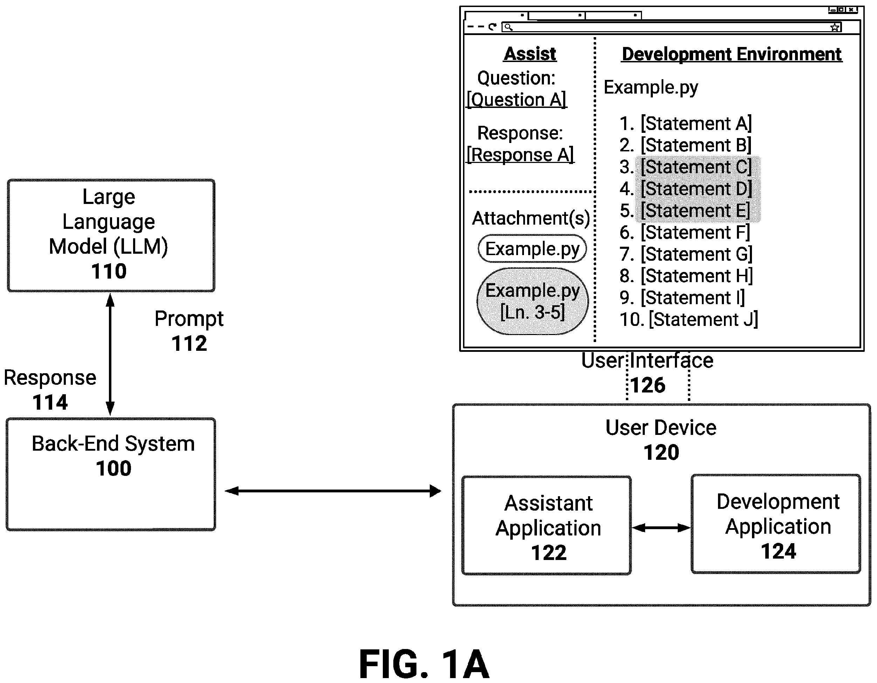

Figure 1A is a block diagram of an example user device 120 executing an assistant application 122 and development application 124 in communication with a back-end system 100 and large language model (LLM) 110. The assistant application 122 and development application 124 may represent examples of web applications, such that the user device 120 is presenting front-ends (e.g., client-side versions) associated with the web applications (e.g., via a browser). While web applications are described herein, as may be appreciated the assistant application 122 and development application 124 may represent applications executing on the user device 120 (e.g., standalone applications, such as native applications).

In the illustrated example, the user device 120 is presenting a user interface 126 that includes an Assist portion (e.g., on the left) and a Development Environment (e.g., on the right). In some embodiments, the Assist portion and Development Environment may be included in separate browser tabs or windows. With respect to user interface 126, the Assist portion and Development Environment are illustrated as being separate front-ends of applications 122-124. For example, the front-ends may be embedded in the respective portions (e.g., using iframes).

In some embodiments, the applications 122-124 may represent modules or portions of a larger application. The front-ends associated with the assistant application 122 and development application 124 may be composed together to form a cohesive user interface (e.g., interface 126). In the illustrated example, the development application 124 is presenting a code file for editing by a user. In some embodiments, the development application 124 may be tabbed such that multiple code files are presented. The development application 124 may additionally present split-screen views of multiple code files.

As described herein, the assistant application 122 and development application 124 may communicate via communication channel(s). In some embodiments, the communication channel may be directional from the development application 124 to the assistant application 122. For example, the assistant application 122 may receive information (e.g., messages) from the development application 124. In this example, the development application 124 may push messages to the assistant application (e.g., the assistant application 122 may subscribe to messages).

An example message may indicate a state, or other information, associated with the development environment. An example state may indicate a current code file being viewed, a current repository, a build state, a debug state, and so on. In Figure 1A, the user has selected lines 3-5 of a code file (e.g., Example.py). The selection may represent user input provided to user interface 126, for example a cursor selection user keyboard, mouse, voice, touch-input, and so on. In response to the selection, the development environment has updated to highlight the selected statements (e.g., corresponding to lines 3-5). While highlighting is illustrated, as may be appreciated the selection may cause the development application 124 to update according to different visual appearances. For the example message, the message may include information identifying the selected lines of code. The message may additionally identify the code file the user is working on. The message may additionally identify the repository that the user is in.

In some embodiments, the development application 124 may provide messages to the assistant application 122 periodically or based on an update made to the development application 124. As an example, based on an update to the state (e.g., selection of a repository, selection of a particular code file, selection of particular lines included in a code file, selection of a user interface element) the development application may provide message(s) to the assistant application 122. In this way, the assistant application 122 may maintain a substantially current indication of the user's interactions with the development application.

The assist portion of the user interface 126 may update to reflect the user selection of the lines. For example, the assistant application may receive message(s) from the development application reflecting the selection of the lines. Accordingly, the example user interface 126 includes two interactive elements - the first identifying the code file (e.g., Example.py) and the second identifying the selected lines of the code file (e.g., Example.py lines 305). In some embodiments, a third interactive element may indicate the code repository, library, top-level file of a tree structure, and so on, associated with the code file. The user may provide input, for example via a mouse, keyboard, touch-screen, and so on, to select one or all of these interactive elements. Upon selection, the corresponding code may be retrieved (e.g., via back-end system 100). As will be described, the corresponding code may be attached to the user's question, such as included in an LLM prompt for input to LLM 110. In some embodiments, the user may hover a mouse over one of the interactive elements, or provide particular touch input, to view a graphical representation of the associated code.

The user may additionally write, or otherwise provide, a question or query for the LLM 110. For example, the user may ask whether the LLM 110 is able to identify, or correct, a bug. The user may also whether the LLM 110 is able to improve upon the selected code. In general, the user may ask an arbitrary question of the LLM 110. In some embodiments, the user interface 126 (e.g., the assist portion) may include one or more possible questions or analyses that the LLM 110 can perform. The user may then select from among these questions or analyses.

The back-end system 100 may implement back-end functionality associated with the assistant application 122 and development application 124. For example, the back-end system 100 may obtain the above-described code and include it in a prompt 112 to the LLM 110. The back-end system 100 may request the code based on information (e.g., message(s) routed to the assistant application 122 from the development application 124. As an example, a message may indicate that the user has selected lines 3-5. Based on interaction with the assist portion, such as interaction with the interactive element depicting 'Example.py [Ln. 3-5]', the back-end system 100 may obtain the relevant code.

The above-described message(s) may be provided, as an example, via a broadcast channel. For example, the assistant application 122 may subscribe to updates or messages from the development application 124. In this example, the assistant application 122 may thus obtain message(s) reflecting that the user has interacted with lines 3-5 of Example.py. Upon selection of the interactive element associated with these lines, the back-end functionality associated with the assistant may obtain the relevant code (e.g., lines 3-5).

In some embodiments, the assistant application 122 and development application 124 may communicate with the back-end system 100 using respective web sockets. For example, upon selection of lines 3-5 the development application 124 may provide information to the back-end system 100 (e.g., via a web socket) identifying the selection. The back-end system 100 may then update the back-end of the assistant application 122 and provide, via a web socket, information identifying the selection to the assistant application 122. In this way, the assistant application may update user interface 126 to reflect the selection of lines 3-5 in the assist portion.

Additional techniques to establish, and maintain, communications between the development application 124 and assistant application 122 may be used and fall within the scope of the disclosure herein. For example, techniques described in U.S. Prov. Patent App. No. 63/750692, which is incorporated herein by reference in its entirety, may be used.

The back-end system 100 may thus form a prompt 112 to be sent to the LLM 110. The prompt 112 may include, for example, a question from the user and the attached code (e.g., selected via user interface 126). As may be appreciated, the prompt 112 may additionally include system prompts (e.g., informing the LLM 110 how to respond, specifying guardrails, and so on), prior context, and so on.

The LLM 110 may represent a large language model which is executing on an external system or, in some embodiments, the back-end system 100. As known by those skilled in the art, a large language model may include a multitude of layers that include learnable parameters. There may be at least a threshold number of learnable parameters, such as 3 billion, 8 billion, 70 billion, 800 billion, 1 trillion, and so on. The layers may include, for example, transformer layers optionally with a mixture of experts (MoE) architecture. During inference, the LLM 110 uses embedding layer(s) to convert input (e.g., input tokens) into vector representations. These representations may then be processed through transformer layers and output layer(s), which generates output in an autoregressive manner. Example LLMs may include Large Language Model Meta AI (Llama), Qwen, Claude, generative pre-trained transformer (GPT) models, and so on.

The back-end system 100 may thus receive response 114 from the LLM 110. The response 114 may optionally be analyzed using one or more other LLMs, for example which implement guardrails. The back-end system 100 may provide the response to the assistant application 122 for inclusion in user interface 126.

As described above, code may be attached for inclusion in prompt 112 based on user input to user interface 126. In some embodiments, the code may be automatically attached. For example, the user of user interface 126 may specify a setting. The user may also indicate specific types of scenarios or questions which the user wants code to be automatically attached. For this, an LLM or classifier may automatically determine when a scenario or question is of the specific types. The code may additionally be attached based on the question referencing a specific portion of it (e.g., the user may ask a question that specifically identifies line 3 or a portion of a statement included in lines 3-5).

As will be described in more detail below, the back-end system 100 may determine metadata which is relevant to the question. For example, lines 3-5 may reference a dataset or object types associated with an ontology. In this example, and with respect to a dataset, the back-end system 100 may obtain metadata describing, for example, columns included in the dataset. With respect to an ontology, the back-end system 100 may obtain metadata describing the ontology. In this way, the back-end system 100 may surface relevant information automatically. In some embodiments, the back-end system 100 may use semantic search techniques, retrieval-augmented generation (RAG), and so on, to determine relevant metadata.

### Ontology Model

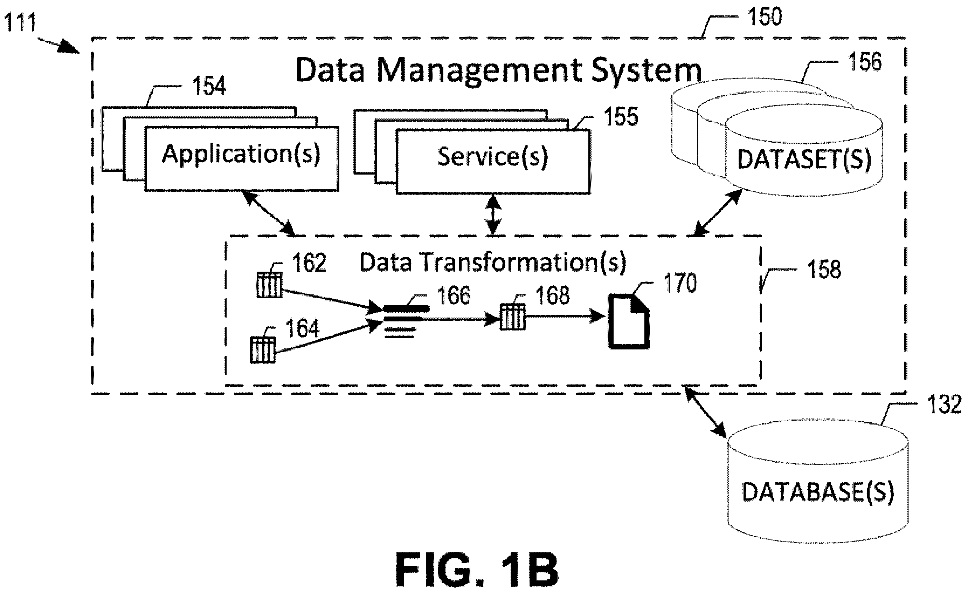

Figure 1B illustrates an example data management system 150 for use with a back-end system (e.g., system 100), according to some embodiments of the present disclosure. In particular, the data management system 150 can be used with the back-end system 100 described above with respect to Figure 1A. In the embodiments of Figure 1B, a computing environment 111 can be similar to, overlap with, and/or be used in conjunction with the description of Figure 1A. For example, the computing environment 111 can include a database 132. The computing environment 111 can also include a data management system 150.

The example data management system 150 includes one or more applications 154, one or more services 155, one or more initial datasets 156, and a data transformation process 158 (also referred to herein as a build process). The example data management system 150 can include a data pipeline system. The data management system 150 can transform data and record the data transformations. The one or more applications 154 can include applications that enable users to view datasets, interact with datasets, filter data sets, and/or configure dataset transformation processes or builds. The one or more services 155 can include services that can trigger the data transformation builds and API services for receiving and transmitting data. The one or more initial datasets 156 can be automatically retrieved from external sources and/or can be manually imported by a user. The one or more initial datasets 156 can be in many different formats such as a tabular data format (SQL, delimited, or a spreadsheet data format), a data log format (such as network logs), or time series data (such as sensor data).

The data management system 150, via the one or more services 155, can apply the data transformation process 158. An example data transformation process 158 is shown. The data management system 150 can receive one or more initial datasets 162, 164. The data management system 150 can apply a transformation to the dataset(s). For example, the data management system 150 can apply a first transformation 166 to the initial datasets 162, 164, which can include joining the initial datasets 162, 164 (such as or similar to a SQL JOIN), and/or a filtering of the initial datasets 162, 164. The output of the first transformation 166 can include a modified dataset 168. A second transformation of the modified dataset 168 can result in an output dataset 170, such as a report or a joined table in a tabular data format that can be stored in the database 132. Each of the steps in the example data transformation process 158 can be recorded by the data management system 150 and made available as a resource to the back-end 100. For example, a resource can include a dataset and/or a dataset item, a transformation, or any other step in a data transformation process. As mentioned above, the data transformation process or build 158 can be triggered by the data management system 150, where example triggers can include nightly build processes, detected events, or manual triggers by a user. Additional aspects of data transformations and the data management system 150 are described in further detail below.

The techniques for recording and transforming data in the data management system 150 may include maintaining an immutable history of data recording and transformation actions such as uploading a new dataset version to the data management system 150 and transforming one dataset version to another dataset version. The immutable history is referred to herein as "the catalog." The catalog may be stored in a database. Preferably, reads and writes from and to the catalog are performed in the context of ACID-compliant transactions supported by a database management system. For example, the catalog may be stored in a relational database managed by a relational database management system that supports atomic, consistent, isolated, and durable (ACID) transactions.

The catalog can include versioned immutable "datasets." More specifically, a dataset may encompass an ordered set of conceptual dataset items. The dataset items may be ordered according to their version identifiers recorded in the catalog. Thus, a dataset item may correspond to a particular version of the dataset. A dataset item may represent a snapshot of the dataset at a particular version of the dataset. As a simple example, a version identifier of '1' may be recorded in the catalog for an initial dataset item of a dataset. If data is later added to the dataset, a version identifier of '2' may be recorded in the catalog for a second dataset item that conceptually includes the data of the initial dataset item and the added data. In this example, dataset item '2' may represent the current dataset version and is ordered after dataset item '1'.

As well as being versioned, a dataset may be immutable. That is, when a new version of the dataset corresponding to a new dataset item is created for the dataset in the system, pre- existing dataset items of the dataset are not overwritten by the new dataset item. In this way, pre-existing dataset items (i.e., pre-existing versions of the dataset) are preserved when a new dataset item is added to the dataset (i.e., when a new version of the dataset is created). Note that supporting immutable datasets is not inconsistent with pruning or deleting dataset items corresponding to old dataset versions. For example, old dataset items may be deleted from the system to conserve data storage space.

A version of dataset may correspond to a successfully committed transaction against the dataset. In these embodiments, a sequence of successfully committed transactions against the dataset corresponds to a sequence of dataset versions of the dataset (i.e., a sequence of dataset items of the dataset).

A transaction against a dataset may add data to the dataset, edit existing data in the dataset, remove existing data from the dataset, or a combination of adding, editing, or removing data. A transaction against a dataset may create a new version of the dataset (i.e., a new dataset item of the dataset) without deleting, removing, or modifying pre-existing dataset items (i.e., without deleting, removing, or modifying pre-existing dataset versions). A successfully committed transaction may correspond to a set of one or more files that contain the data of the dataset item created by the successful transaction. The set of files may be stored in a file system.

In the catalog, a dataset item of a dataset may be identified by the name or identifier of the dataset and the dataset version corresponding to the dataset item. In a preferred embodiment, the dataset version corresponds an identifier assigned to the transaction that created the dataset version. The dataset item may be associated in the catalog with the set of files that contain the data of the dataset item. In a preferred embodiment, the catalog treats the set of files as opaque. That is, the catalog itself may store paths or other identifiers of the set of files but may not otherwise open, read, or write to the files.

In sum, the catalog may store information about datasets. The information may include information identifying different versions (i.e., different dataset items) of the datasets. In association with information identifying a particular version (i.e., a particular dataset item) of a dataset, there may be information identifying one or more files that contain the data of the particular dataset version (i.e., the particular dataset item).

The catalog may store information representing a non-linear history of a dataset. Specifically, the history of a dataset may have different dataset branches. Branching may be used to allow one set of changes to a dataset to be made independent and concurrently of another set of changes to the dataset. The catalog may store branch names in association with dataset version identifiers for identifying dataset items that belong to a particular dataset branch.

The catalog may provide dataset provenance at the transaction level of granularity. As an example, suppose a transformation is executed in the data management system 150 multiple times that reads data from dataset A, reads data from dataset B, transforms the data from dataset A and the data from dataset B in some way to produce dataset C. As mentioned, this transformation may be performed multiple times. Each transformation may be performed in the context of a transaction. For example, the transformation may be performed daily after datasets and B are updated daily in the context of transactions. The result being multiple versions of dataset A, multiple versions of dataset B, and multiple versions of dataset C as a result of multiple executions of the transformation. The catalog may contain sufficient information to trace the provenance of any version of dataset C to the versions of datasets A and B from which the version of dataset C is derived. In addition, the catalog may contain sufficient information the trace the provenance of those versions of datasets A and B to the earlier versions of datasets A and B from which those versions of datasets A and B were derived.

The provenance tracking ability is the result of recording in the catalog for a transaction that creates a new dataset version, the transaction or transactions that the given transaction depends on (e.g., is derived from). The information recorded in the catalog may include an identifier of each dependent transaction and a branch name of the dataset that the dependent transaction was committed against.

According to some embodiments, provenance tracking extends beyond transaction level granularity to column level granularity. For example, suppose a dataset version A is structured as a table of two columns and a dataset version B is structured as a table of five columns. Further assume, column three of dataset version B is computed from column one of dataset version A. In this case, the catalog may store information reflecting the dependency of column three of dataset version B on column one of dataset version A.

The catalog may also support the notion of permission transitivity. For example, suppose the catalog records information for two transactions executed against a dataset referred to in this example as "Transaction 1" and Transaction 2." Further suppose a third transaction is performed against the dataset which is referred to in this example as "Transaction 3." Transaction 3 may use data created by Transaction 1 and data created by Transaction 2 to create the dataset item of Transaction 3. After Transaction 3 is executed, it may be decided according to organizational policy that a particular user should not be allowed to access the data created by Transaction 2. In this case, as a result of the provenance tracking ability, and in particular because the catalog records the dependency of Transaction 3 on Transaction 2, if permission to access the data of Transaction 2 is revoked from the particular user, permission to access the data of Transaction 3 may be transitively revoked from the particular user.

The transitive effect of permission revocation (or permission grant) can apply to an arbitrary number of levels in the provenance tracking. For example, returning to the above example, permission may be transitively revoked for any transaction that depends directly or indirectly on the Transaction 3.

According to some embodiments, where provenance tracking in the catalog has column level granularity. Then permission transitivity may apply at the more fine-grained column level. In this case, permission may be revoked (or granted) on a particular column of a dataset and based on the column-level provenance tracking in the catalog, permission may be transitively revoked on all direct or indirect descendent columns of that column.

A build service can manage transformations which are executed in the system to transform data. The build service may leverage a directed acyclic graph data (DAG) structure to ensure that transformations are executed in proper dependency order. The graph can include a node representing an output dataset to be computed based on one or more input datasets each represented by a node in the graph with a directed edge between node(s) representing the input dataset(s) and the node representing the output dataset. The build service traverses the DAG in dataset dependency order so that the most upstream dependent datasets are computed first. The build service traverses the DAG from the most upstream dependent datasets toward the node representing the output dataset rebuilding datasets as necessary so that they are up-to-date. Finally, the target output dataset is built once all of the dependent datasets are up-to-date.

The data management system 150 can support branching for both data and code. Build branches allow the same transformation code to be executed on multiple branches. For example, transformation code on the master branch can be executed to produce a dataset on the master branch or on another branch (e.g., the develop branch). Build branches also allow transformation code on a branch to be executed to produce datasets on that branch. For example, transformation code on a development branch can be executed to produce a dataset that is available only on the development branch. Build branches provide isolation of re-computation of graph data across different users and across different execution schedules of a data pipeline. To support branching, the catalog may store information represents a graph of dependencies as opposed to a linear dependency sequence.

The data management system 150 may enable other data transformation systems to perform transformations. For example, suppose the system stores two "raw" datasets R1 and R2 that are both updated daily (e.g., with daily web log data for two web services). Each update creates a new version of the dataset and corresponds to a different transaction. The datasets are deemed raw in the sense that transformation code may not be executed by the data management system 150 to produce the datasets. Further suppose there is a transformation A that computes a join between datasets R1 and R2. The join may be performed in a data transformation system such a SQL database system, for example. More generally, the techniques described herein are agnostic to the particular data transformation engine that is used. The data to be transformed and the transformation code to transform the data can be provided to the engine based on information stored in the catalog including where to store the output data.

According to some embodiments, the build service supports a push build. In a push build, rebuilds of all datasets that depend on an upstream dataset or an upstream transformation that has been updated are automatically determined based on information in the catalog and rebuilt. In this case, the build service may accept a target dataset or a target transformation as an input parameter to a push build command. The build service than determines all downstream datasets that need to be rebuilt, if any.

As an example, if the build service receives a push build command with dataset R1 as the target, then the build service would determine all downstream datasets that are not up-to-date with respect to dataset R1 and rebuild them. For example, if dataset D1 is out-of-date with respect to dataset R1, then dataset D1 is rebuilt based on the current versions of datasets R1 and R2 and the current version of transformation A. If dataset D1 is rebuilt because it is out-of-date, then dataset D2 will be rebuilt based on the up-to-date version of dataset D1 and the current version of transformation B and so on until all downstream dataset of the target dataset are rebuilt. The build service may perform similar rebuilding if the target of the push build command is a transformation.

The build service may also support triggers. In this case, a push build may be considered a special case of a trigger. A trigger, generally, is a rebuild action that is performed by the build service that is triggered by the creation of a new version of a dataset or a new version of a transformation in the system.

A schema metadata service can store schema information about files that correspond to transactions reflected in the catalog. An identifier of a given file identified in the catalog may be passed to the schema metadata service and the schema metadata service may return schema information for the file. The schema information may encompass data schema related information such as whether the data in the file is structured as a table, the names of the columns of the table, the data types of the columns, user descriptions of the columns, etc.

The schema information can be accessible via the schema metadata service may versioned separately from the data itself in the catalog. This allows the schemas to be updated separately from datasets and those updates to be tracked separately. For example, suppose a comma separated file is uploaded to the system as particular dataset version. The catalog may store in association with the particular dataset version identifiers of one or more files in which the CSV data is stored. The catalog may also store in association with each of those one or more file identifiers, schema information describing the format and type of data stored in the corresponding file. The schema information for a file may be retrievable via the scheme metadata service given an identifier of the file as input. Note that this versioning scheme in the catalog allows new schema information for a file to be associated with the file and accessible via the schema metadata service. For example, suppose after storing initial schema information for a file in which the CSV data is stored, updated the schema information is stored that reflects a new or better understanding of the CSV data stored in the file. The updated schema information may be retrieved from the schema metadata service for the file without having to create a new version of the CSV data or the file in which the CSV data is stored.

When a transformation is executed, the build service may encapsulate the complexities of the separate versioning of datasets and schema information. For example, suppose transformation A described above in a previous example that accepts the dataset R1 and dataset R2 as input is the target of a build command issued to the build service. In response to this build command, the build service may determine from the catalog the file or files in which the data of the current versions of datasets R1 and R2 is stored. The build service may then access the schema metadata service to obtain the current versions of the schema information for the file or files. The build service may then provide all of identifiers or paths to the file or files and the obtained schema information to the data transformation engine to execute the transformation A. The underlying data transformation engine interprets the schema information and applies it to the data in the file or files when executing the transformation A.

To provide a framework for the following discussion of specific systems and methods described herein, an example database system 210 using an ontology 205 will now be described. This description is provided for the purpose of providing an example and is not intended to limit the techniques to the example data model, the example database system, or the example database system's use of an ontology to represent information.

In one embodiment, a body of data is conceptually structured according to an object-centric data model represented by ontology 205. The conceptual data model is independent of any particular database used for durably storing one or more database(s) 209 based on the ontology 205. For example, each object of the conceptual data model may correspond to one or more rows in a relational database or an entry in Lightweight Directory Access Protocol (LDAP) database, or any combination of one or more databases.

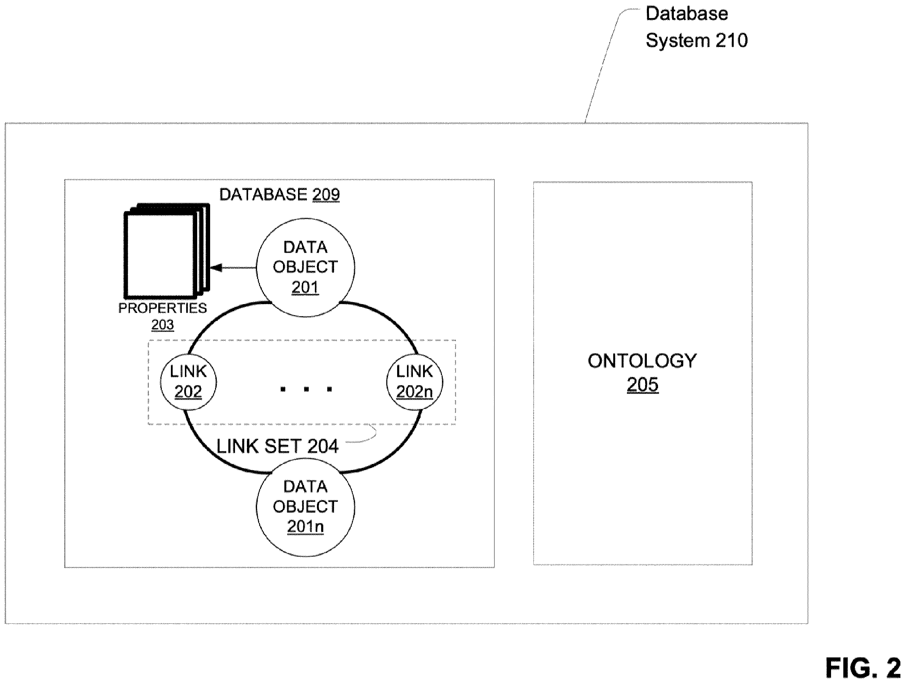

Figure 2 illustrates an object-centric conceptual data model according to an embodiment. An ontology 205, as noted above, may include stored information providing a data model for storage of data in the database 209. The ontology 205 may be defined by one or more object types, which may each be associated with one or more property types. At the highest level of abstraction, data object 201 is a container for information representing things in the world. For example, data object 201 can represent an entity such as a person, a place, an organization, a market instrument, or other noun. Data object 201 can represent an event that happens at a point in time or for a duration. Data object 201 can represent a document or other unstructured data source such as an e-mail message, a news report, or a written paper or article. Each data object 201 is associated with a unique identifier that uniquely identifies the data object within the database system.

Different types of data objects may have different property types. For example, a "Person" data object might have an "Eye Color" property type and an "Event" data object might have a "Date" property type. Each property 203 as represented by data in the database system 210 may have a property type defined by the ontology 205 used by the database 205.

Objects may be instantiated in the database 209 in accordance with the corresponding object definition for the particular object in the ontology 205. For example, a specific monetary payment (e.g., an object of type "event") of US$30.00 (e.g., a property of type "currency") taking place on 3/27/2009 (e.g., a property of type "date") may be stored in the database 209 as an event object with associated currency and date properties as defined within the ontology 205. The data objects defined in the ontology 205 may support property multiplicity. In particular, a data object 201 may be allowed to have more than one property 203 of the same property type. For example, a "Person" data object might have multiple "Address" properties or multiple "Name" properties.

Each link 202 represents a connection between two data objects 201. In one embodiment, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of" relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one embodiment, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one embodiment, a link between two data objects may be established based on similar or matching properties (e.g., property types and/or property values) of the data objects. These are just some examples of the types of connections that may be represented by a link and other types of connections may be represented; embodiments are not limited to any particular types of connections between data objects. For example, a document might contain references to two different objects. For example, a document may contain a reference to a payment (one object), and a person (a second object). A link between these two objects may represent a connection between these two entities through their co-occurrence within the same document.

Each data object 201 can have multiple links with another data object 201 to form a link set 204. For example, two "Person" data objects representing a husband and a wife could be linked through a "Spouse Of" relationship, a matching "Address" property, and one or more matching "Event" properties (e.g., a wedding). Each link 202 as represented by data in a database may have a link type defined by the database ontology used by the database.

### Block Diagrams - Context-Aware Attachments

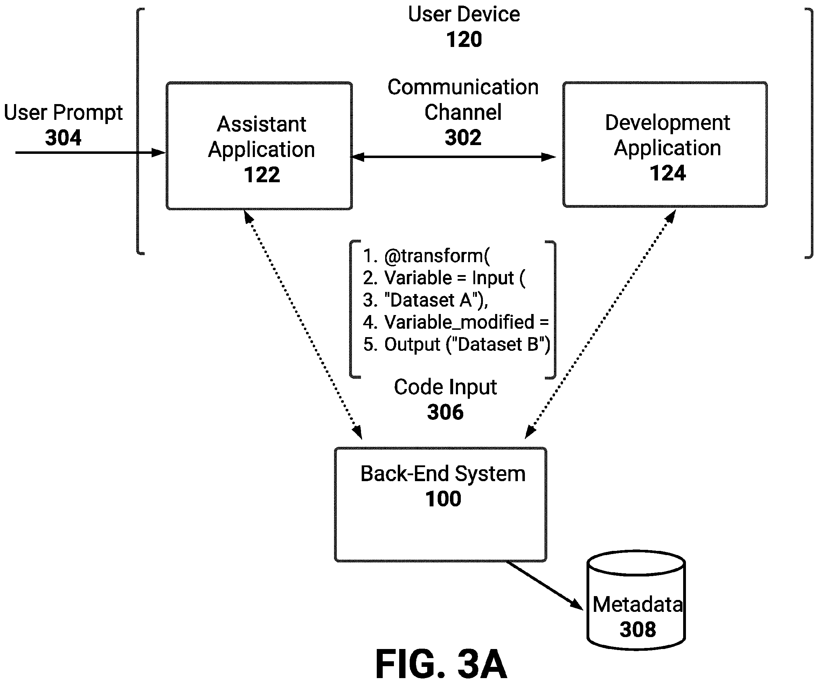

Figure 3A is a block diagram illustrating detail of the example user device 120 providing code input 306 and a user prompt 304 to the back-end system 100. In the illustrated example, the assistant application 122 has received a user prompt 304 (e.g., a question) for example via a user interface associated with the assistant application 122. The user prompt 304 may reflect a question specified by a user or may represent a template question selected by a user. In some embodiments, the user prompt 304 may represent recommended questions which are determined by an LLM.

Code input 306 may be attached to the question, for example a portion of code, a code file, a repository, and so on, may be included in an LLM prompt to an LLM (e.g., LLM 110). While code is described herein, other types of input may be used and fall within the scope of disclosure. For example, the user may be viewing a dataset (e.g., values organized into columns). In this example, the user may select a portion of, or all of, the dataset (e.g., via highlighting or other user input). The input may thus reflect this selected portion of the dataset. As another example, the user may be viewing a portion of an ontology. For example, the ontology may illustrate links between data object types. As one example, the ontology may be graphically illustrated (e.g., nodes reflecting data object types) or may be textually illustrated. The user may select a portion of the ontology and information defining the ontology (e.g., as described herein) may be used as the input (e.g., input 306).

Figure 3A illustrates example code input 306 which includes a transform from Dataset A to Dataset B. To help the LLM respond to the user prompt 304, the back-end system 100 may determine relevant metadata 308. The datasets may reflect datasets stored by, or otherwise accessible to, the back-end system 100. As one example, the datasets may be defined via references, links, URLs, and so on, which are specific to the back-end system 100. Thus, the back-end system 100 may determine that relevant metadata includes information associated with the datasets.

For example, the metadata 308 may thus reflect information defining a structure or schema associated with Dataset A and Dataset B. As an example, the columns used in the datasets may be identified. (e.g., names of the columns, description of the columns). For this example, the back-end system 100 may obtain documentation associated with the datasets or other code that references the datasets. As another example, metadata 308 may include the specific type of data (e.g., integer, float data, the dataset may include specific objects). The metadata 308 may additionally reflect the datasets themselves, such as the specific values included in individual columns of the datasets.

In this way, for the example code input 306 the back-end system 100 may obtain information that informs whether the transformation in the code input 306 is properly formed or otherwise effective. As described herein, metadata may include documentation associated with specific functions, libraries, and so on. Metadata may additionally include implementation examples, design documents, coding standards, and so on. The back-end system 100 may search for relevant metadata based on the specific code input 306. For example, the back-end system 100 may perform a semantic search of database(s). As another example, the back-end system 100 may use an LLM to identify types of information that may be relevant to the code input 306.

As described above, the code input 306 may reference data object types. The associated metadata may include information from an ontology model, such as the specific parameters, links, and so on, which form objects of the data object types. The metadata may be used to inform, for example, whether a user is setting certain parameters (e.g., fields) correctly, whether certain data object types are linked, and so on.

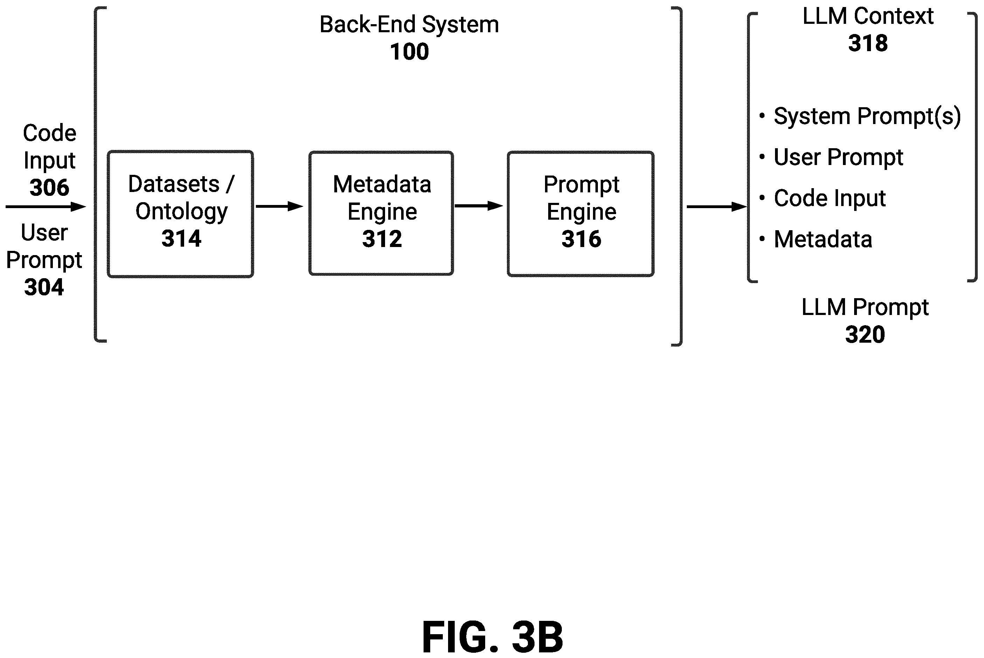

Figure 3B is a block diagram illustrating detail of the example back-end system 100 forming an LLM prompt 320. As described above, the back-end system 100 may obtain a user prompt 304 (e.g., from an assistant application, such as application 122). The back-end system 100 may additionally obtain code input 306, such as based the user attaching the code (e.g., lines of code, a code file, a repository, and so on as described herein).

The back-end system 100 includes a datasets / ontology engine 314 that analyzes the code input 306 to determine relevant metadata that implicates datasets or an ontology. For example, Figure 3A illustrates that the code input 306 references a transformation between datasets. In this example, the datasets / ontology engine 314 may obtain respective schemas, or other information as described herein, associated with the datasets.

The back-end system 100 includes a metadata engine 312 to obtain other types of relevant metadata. For example, the code input 306 may include use of specific functions or libraries. In this example, the metadata engine 312 may identify header files, implementation files, and so on, which are relevant to understanding proper implementation of these functions or libraries.

The back-end system 100 includes a prompt engine 316 that forms the LLM prompt 320. An example LLM prompt 320 is illustrated in figure 3B, with the LLM context 318 (e.g., context window) including at least the user prompt 304 and code input 306. The LLM prompt 320 may additionally include the surfaced metadata, for example schemas associated with Dataset A and Dataset B. The LLM prompt 320 may further include system prompts informing the LLM how to respond to the prompt 320 and any other system messages (e.g., guardrails) that are to be followed.

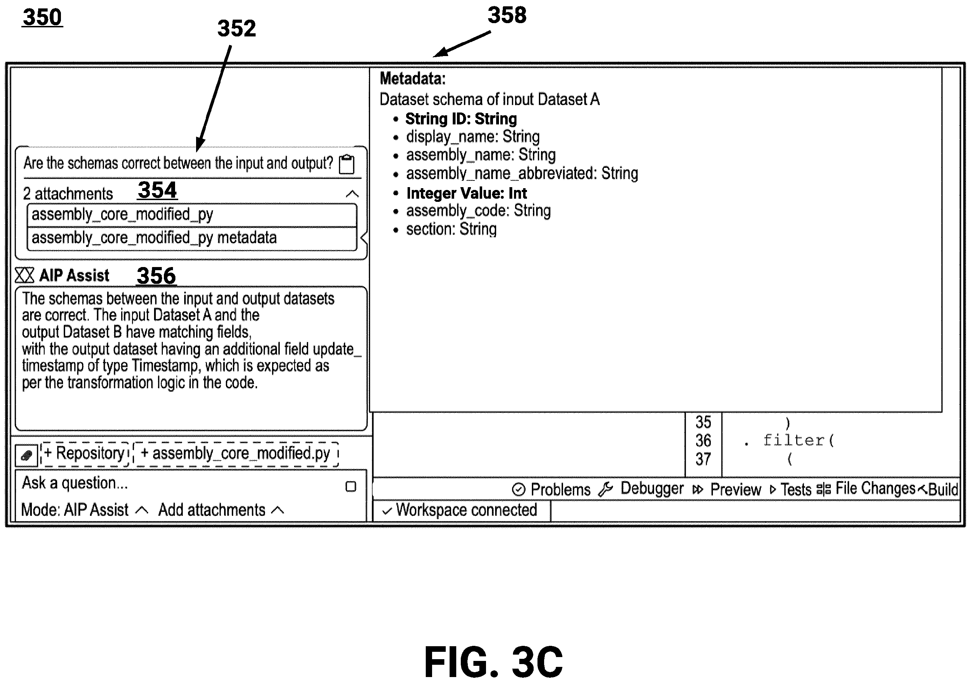

Figure 3C illustrates an example user interface 350 associated with a response from the LLM based on the LLM prompt. The user interface 350 may represent an example of the user interface associated with the assistant application, for example user interface 126 in Figure 1A. In the illustrated example, a question 352 is included which asks whether schemas are correct between the input and output of a portion of code. In portion 354, the user has attached a code file that includes the portion of code. Additionally, metadata has been attached (e.g., by the back-end system 100) that can be used to determine whether the schemas are correct.

Portion 356 includes example output from an LLM based on an LLM prompt that includes the question 352 and attachments 354. The portion 356 indicates that the schemas are correct. Portion 358 illustrates example metadata which the user interface 350 may present to ensure that the user understands the specific schemas.

### Example Flowcharts

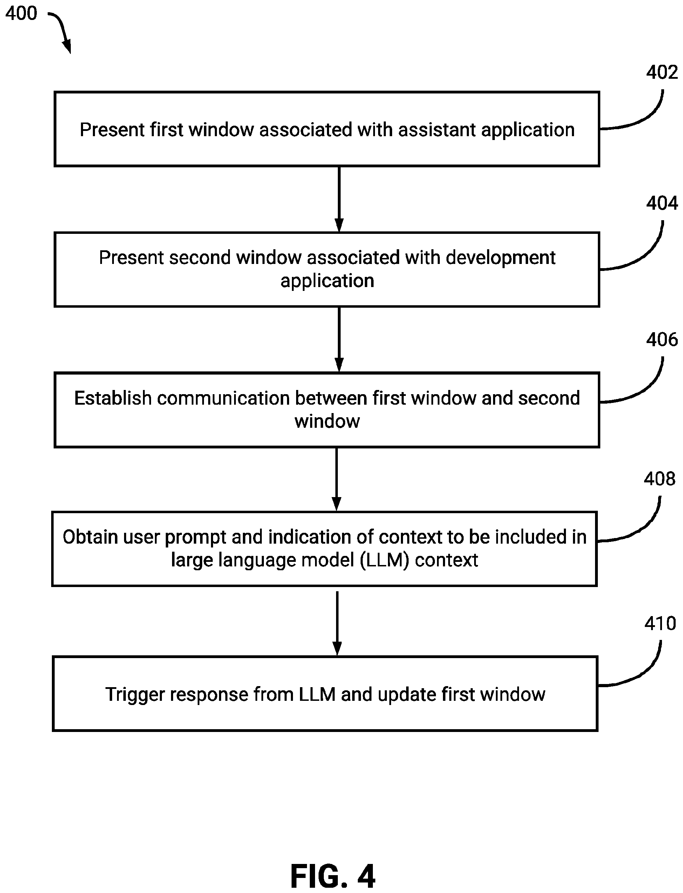

Figure 4 is a flowchart of an example process for a user device triggering a response from an LLM associated with a context-aware attachment. For convenience, the process 400 will be described as being performed by a user device of one or more processors (e.g., user device 120).

At block 402, the user device presents a first window associated with an assistant application. As described herein, the assistant application may represent a web application such that a client-side presents a user interface. The user interface may be included in a particular browser tab or portion of a browser tab (e.g., as illustrated in Figure 1A). The user device may, for example, render information received from a back-end system (e.g., render HTML provided via the system), may execute a client-side application (e.g., execute application logic, such as using JavaScript, which may be referred to as a single-page application, progressive application, and so on), and/or a hybrid thereof. In some embodiments, the first window may reflect a user interface associated with a native or standalone application on the user device.

At block 404, the user device presents a second window associated with a development application. As described herein, the development application may represent a web application such that a client-side presents a user interface. The user interface may be included in a particular browser tab or portion of a browser tab (e.g., as illustrated in Figure 1A). The user device may, for example, render information received from a back-end system (e.g., render HTML provided via the system), may execute a client-side application (e.g., execute application logic, such as using JavaScript, which may be referred to as a single-page application, progressive application, and so on), and/or a hybrid thereof. In some embodiments, the second window may reflect a user interface associated with a native or standalone application on the user device.

At block 406, the user device establishes communications between the assistant application and the development application. The assistant application and development application may establish communications, such as via a communication channel or channels as described herein. For example, the assistant application and development application may establish a unidirectional channel or bidirectional channel. In this example, the assistant application may receive information from the development application. In some embodiments, the development application may receive information from the assistant application. The information may include, for example, message(s) reflecting information such as an indication of a code file, a portion of a code file, and so on, which a user of the user device is viewing / interacting with. In this way, the assistant application may offer a currently viewed code file, currently selected portion of the code file, and so on, as an attachment to a question directed to a large language model (LLM).

At block 408, the user device obtains a user prompt and indication of context to be included in a large language model (LLM) prompt received via an LLM. The user of the user device may write, or select from among a set of, questions for analysis by the LLM. The context may include an attachment or attachments to the question, such as a code file, a portion of a code file, and/or a repository. The context may additionally include information from applications, such as notetaking applications, drawing programs, application or widget configuration applications, and so on. As described herein, the context may include arbitrary text which is relevant to servicing the user prompt. In some embodiments, the user device may present options that include available applications or text determined to be relevant to the user prompt.

In some embodiments, the assistant application may receive, for example via the communication channel, information reflecting the attachment or attachments. As an example, the assistant application may receive information identifying the code file, portion of the code file, and/or repository. The assistant application may update to graphically identify the received information (e.g., names or identifiers) and the user may select one or more of the attachments. As described above, the back-end system may then obtain the associated attachments (e.g., from storage, such as storage associated with the development application).

As described above, the user may also be viewing or creating an ontology (e.g., viewing data object types, links between the data object types, specific data objects, and so on). For this example, the indication of context may include reference(s) to the ontology. The back-end system can then obtain information defining the ontology based on the reference(s). The user may also be viewing or creating a dataset. For this example, the indication of context may include a schema associated with the dataset or information identifying the specific dataset. With respect to information identifying the specific dataset, the back-end system can then obtain the associated schema as described herein.

At block 410, the user device triggers a response from the LLM. The assistant application can receive user input causing the user prompt and context to be transmitted to the LLM. As described above, the back-end system may form a prompt and transmit the prompt the LLM. The back-end system can then update the assistant application with a response, such as a textual, graphical, audio/visual response.

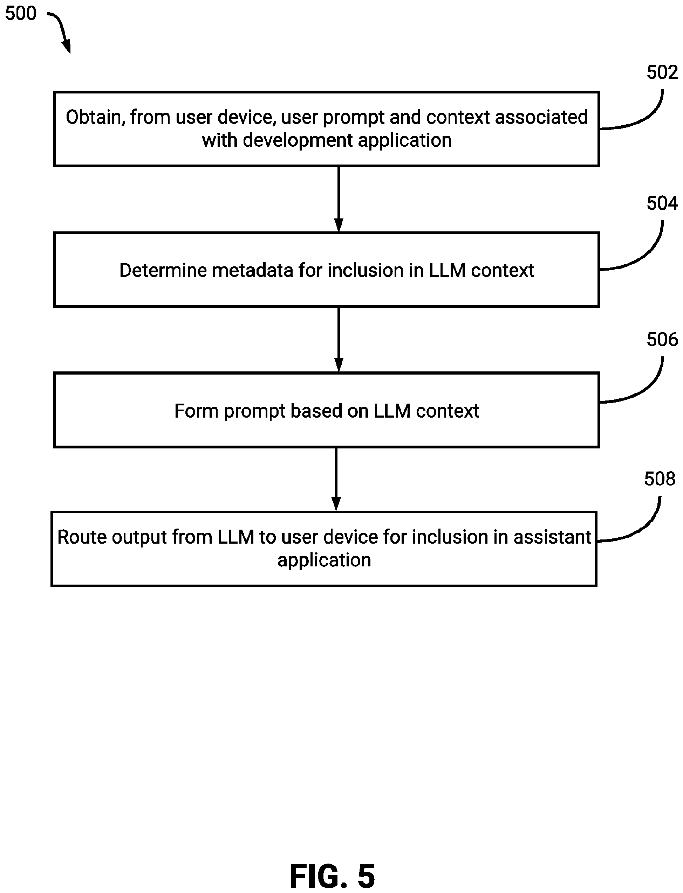

Figure 5 is a flowchart of an example process 500 for a back-end system routing output associated with a context-aware attachment from an LLM to a user device. For convenience, the process 500 will be described as being performed by a system of one or more computers (e.g., the back-end system 100).

At block 502, the system obtains a user prompt and attached context associated with a development application. The user prompt may reflect a question written by, or selected by, a user of an assistant application. The context may include a portion of a code file, the full code file, a repository, and so on, which is associated with the user's actions with respect to the development application. The context may additionally include an ontology, or portion thereof. The context may additionally include dataset schema(s).

At block 504, the system determines metadata for inclusion in an LLM context (e.g., context window). As described herein, the system may obtain metadata that helps the LLM to respond to the user prompt. For example, the system may obtain dataset schema(s) for objects or datasets referenced in a portion of code selected by the user. As another example, the system may also obtain a portion of an ontology that is relevant to a portion of code selected by the user.

At block 506, the system forms a prompt based on the LLM context. The system may include the user prompt, attached context, metadata, and other information (e.g., system messages, prior context) in a prompt.

At block 508 the system routes output from the LLM to the user device for inclusion in the assistant application.

### Example User Interfaces

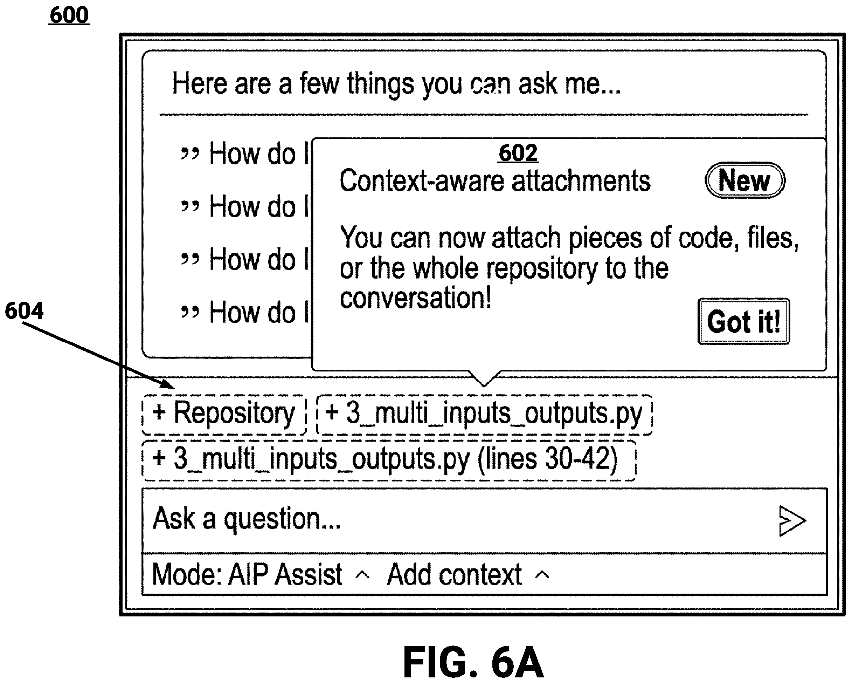

Figures 6A-6C illustrate example user interfaces according to the techniques described herein.

Figure 6A illustrates an example user interface 600 in which a portion 602 identifies that the user can attach information. The example information identified is pieces of code, files, or an entire repository. Below the portion 602, user interface elements 604 to attach the information are included. The user may interact with these elements, such as via selecting the 'plus' symbol or by other techniques. Each element may correspond to a selectable option associated with a different type of attachment. For example, a first user interface element may provide a first selectable option to attach the repository, a second user interface element may provide a second selectable option to attach the code file, and a third user interface element may provide selectable option to select the portion of the code file.

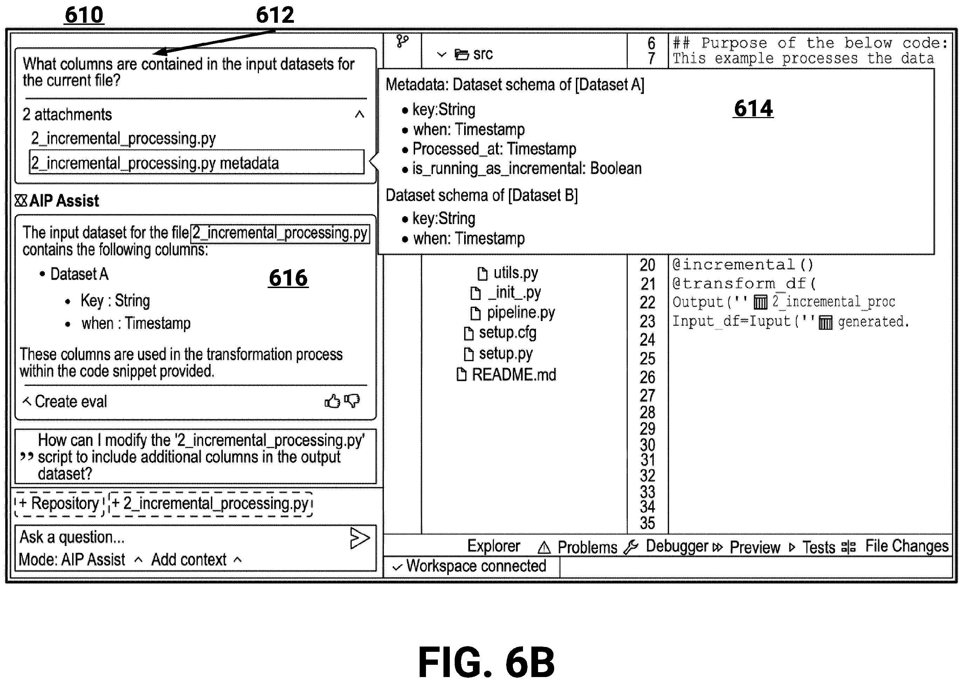

Figure 6B illustrates an example user interface 610 in which a user has asked 612 about the columns that are included in example datasets. As described herein, the back-end system may obtain the relevant schemas as metadata. In the illustrated example, an example schema 614 is presented so that the user can view the details. The schema 614 may be presented based on the user providing user input to the metadata identified as an attachment. For example, the user may hover over the interactive element, long press, and so on.

In portion 616, the LLM has responded and noted that Dataset A includes particular columns. The LLM has also noted that the columns are used in the transformation process within code attached as context (e.g., 2_incremental_processing.py).

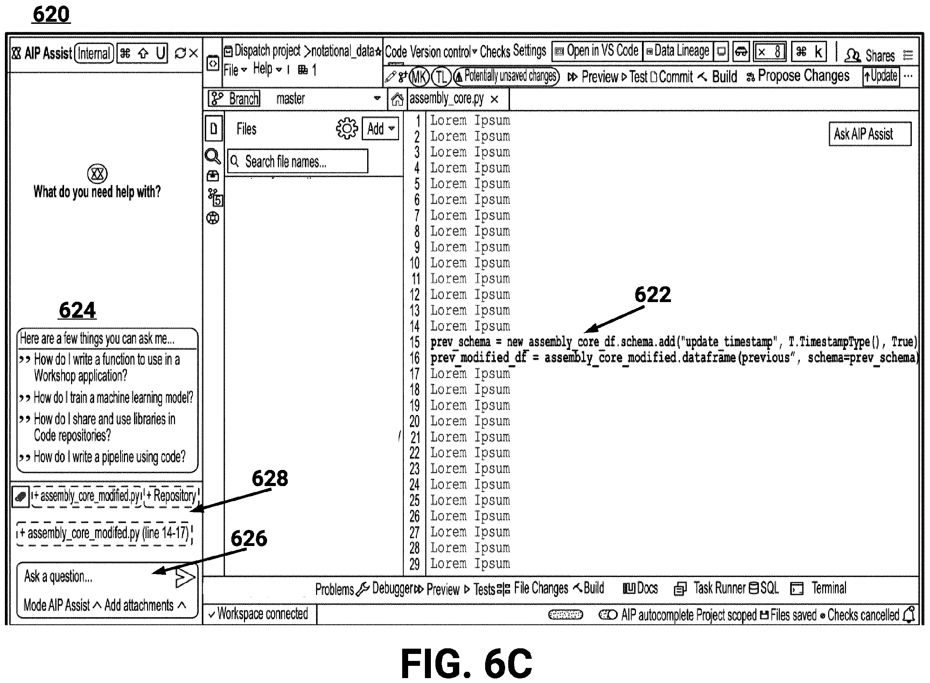

Figure 6C illustrates an example user interface 620 in which a user has highlighted two lines of code 622 in a development application. The assistant application identifies example questions 624 which the user may ask and also includes a portion 626 in which the user may write an arbitrary question. In portion 628, an identification of example attachments is included. The user may select from among these attachments, for example to attach the full repository, the full code file, or just the two lines of code for use by an LLM.

### Additional Implementation Details and Embodiments

Various embodiments of the present disclosure may be a system, a method, and/or a computer program product at any possible technical detail level of integration. The computer program product may include a computer readable storage medium (or mediums) having computer readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer readable storage medium (or mediums).

The computer readable storage medium can be a tangible device that can retain and store data and/or instructions for use by an instruction execution device. The computer readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions (as also referred to herein as, for example, "code," "instructions," "module," "application," "software application," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Java, C++, or the like, and procedural programming languages, such as the "C" programming language or similar programming languages. Computer readable program instructions may be callable from other instructions or from itself, and/or may be invoked in response to detected events or interrupts. Computer readable program instructions configured for execution on computing devices may be provided on a computer readable storage medium, and/or as a digital download (and may be originally stored in a compressed or installable format that requires installation, decompression or decryption prior to execution) that may then be stored on a computer readable storage medium. Such computer readable program instructions may be stored, partially or fully, on a memory device (e.g., a computer readable storage medium) of the executing computing device, for execution by the computing device. The computer readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart(s) and/or block diagram(s) block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid state drive) either before or after execution by the computer processor.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, etc. with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above-embodiments may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows Server, etc.), Windows CE, Unix, Linux, SunOS, Solaris, Blackberry OS, VxWorks, or other suitable operating systems. In other embodiments, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

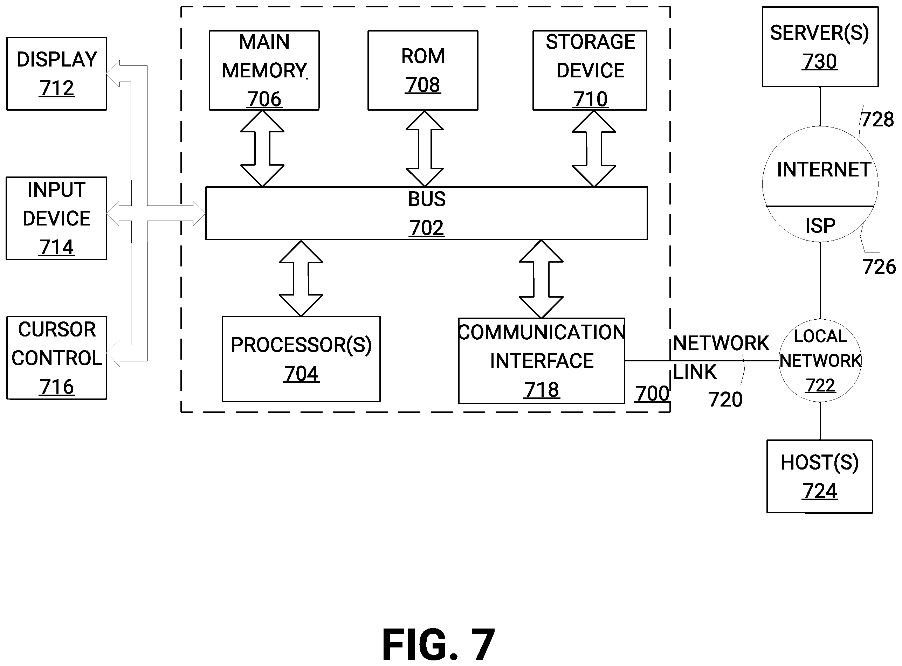

For example, Figure 7 is a block diagram that illustrates a computer system 700 upon which various embodiments may be implemented. Computer system 700 includes a bus 702 or other communication mechanism for communicating information, and a hardware processor, or multiple processors, 704 coupled with bus 702 for processing information. Hardware processor(s) 704 may be, for example, one or more general purpose microprocessors.

Computer system 700 also includes a main memory 706, such as a random access memory (RAM), cache and/or other dynamic storage devices, coupled to bus 702 for storing information and instructions to be executed by processor 704. Main memory 706 also may be used for storing temporary variables or other intermediate information during execution of instructions to be executed by processor 704. Such instructions, when stored in storage media accessible to processor 704, render computer system 700 into a special-purpose machine that is customized to perform the operations specified in the instructions.

Computer system 700 further includes a read only memory (ROM) 708 or other static storage device coupled to bus 702 for storing static information and instructions for processor 704. A storage device 710, such as a magnetic disk, optical disk, or USB thumb drive (Flash drive), etc., is provided and coupled to bus 702 for storing information and instructions.

Computer system 700 may be coupled via bus 702 to a display 712, such as a cathode ray tube (CRT) or LCD display (or touch screen), for displaying information to a computer user. An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (e.g., x) and a second axis (e.g., y), that allows the device to specify positions in a plane. In some embodiments, the same direction information and command selections as cursor control may be implemented via receiving touches on a touch screen without a cursor.

Computing system 700 may include a user interface module to implement a GUI that may be stored in a mass storage device as computer executable program instructions that are executed by the computing device(s). Computer system 700 may further, as described below, implement the techniques described herein using customized hard-wired logic, one or more ASICs or FPGAs, firmware and/or program logic which in combination with the computer system causes or programs computer system 700 to be a special-purpose machine. According to one embodiment, the techniques herein are performed by computer system 700 in response to processor(s) 704 executing one or more sequences of one or more computer readable program instructions contained in main memory 706. Such instructions may be read into main memory 706 from another storage medium, such as storage device 710. Execution of the sequences of instructions contained in main memory 706 causes processor(s) 704 to perform the process steps described herein. In alternative embodiments, hard-wired circuitry may be used in place of or in combination with software instructions.

Various forms of computer readable storage media may be involved in carrying one or more sequences of one or more computer readable program instructions to processor 704 for execution. For example, the instructions may initially be carried on a magnetic disk or solid state drive of a remote computer. The remote computer can load the instructions into its dynamic memory and send the instructions over a telephone line using a modem. A modem local to computer system 700 can receive the data on the telephone line and use an infra-red transmitter to convert the data to an infra-red signal. An infra-red detector can receive the data carried in the infra-red signal and appropriate circuitry can place the data on bus 702. Bus 702 carries the data to main memory 706, from which processor 704 retrieves and executes the instructions. The instructions received by main memory 706 may optionally be stored on storage device 710 either before or after execution by processor 704.

Computer system 700 also includes a communication interface 718 coupled to bus 702. Communication interface 718 provides a two-way data communication coupling to a network link 720 that is connected to a local network 722. For example, communication interface 718 may be an integrated services digital network (ISDN) card, cable modem, satellite modem, or a modem to provide a data communication connection to a corresponding type of telephone line. As another example, communication interface 718 may be a local area network (LAN) card to provide a data communication connection to a compatible LAN (or WAN component to communicated with a WAN). Wireless links may also be implemented. In any such implementation, communication interface 718 sends and receives electrical, electromagnetic or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communication services through the world wide packet data communication network now commonly referred to as the "Internet" 728. Local network 722 and Internet 728 both use electrical, electromagnetic or optical signals that carry digital data streams. The signals through the various networks and the signals on network link 720 and through communication interface 718, which carry the digital data to and from computer system 700, are example forms of transmission media.

Computer system 700 can send messages and receive data, including program code, through the network(s), network link 720 and communication interface 718. In the Internet example, a server 730 might transmit a requested code for an application program through Internet 728, ISP 726, local network 722 and communication interface 718.

The received code may be executed by processor 704 as it is received, and/or stored in storage device 710, or other non-volatile storage for later execution.

As described above, in various embodiments certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain embodiments, one or more of the computing devices and/or systems of the disclosure may include mobile computing devices, and user interfaces may be accessible through such mobile computing devices (for example, smartphones and/or tablets).

Many variations and modifications may be made to the above-described embodiments, the elements of which are to be understood as being among other acceptable examples. All such modifications and variations are intended to be included herein within the scope of this disclosure. The foregoing description details certain embodiments. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, etc. may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain embodiments require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general purpose computer comprising one or more processors should not be interpreted as excluding other computer components, and may possibly include such components as memory, input/output devices, and/or network interfaces, among others.

While the above detailed description has shown, described, and pointed out novel features as applied to various embodiments, it may be understood that various omissions, substitutions, and changes in the form and details of the devices or processes illustrated may be made without departing from the spirit of the disclosure. As may be recognized, certain embodiments of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A method implemented by one or more processors executing program instructions, the method comprising: causing presentation, via an assistant web application and a development web application executing in a browser, of a first window and a second window, the assistant web application and the development web application being in communication with a back-end system; establishing communications, via a communication channel, between the assistant web application and the development web application, the communication channel identifying interactions with the development web application; obtaining, via the assistant web application, a user prompt and an indication of context to be included in a large language model (LLM) prompt, wherein the user prompt and indication of context is routed to the back-end system, wherein the indication of context is specified based on user input provided to the first window reflecting attachment of one or more of a repository, a code file accessible in the second window, or a portion of the code file, wherein the back-end system is in communication with an LLM, wherein the back-end system obtains the code associated with the attachment, and wherein the back-end system forms the LLM prompt based on the user prompt, the obtained code, and metadata determined by the back-end system; and triggering a response from the LLM and updating the first window to reflect the response.

Clause 2. The method of clause 1, wherein the second window is configured to respond to user input to select the portion of the code file, and wherein based on receipt of the user input, the development web application transmits a message to the assistant web application reflecting selection of the portion.

Clause 3. The method of clause 1 or clause 2, wherein the assistant web application presents selectable options associated with attachments, the selection options including a first selectable option to attach the repository, a second selectable option to attach the code file, and a third selectable option to select the portion of the code file.

Clause 4. The method of any preceding clause, wherein the communication channel is broadcast channel.

Clause 5. The method of any preceding clause, wherein the first window is configured to: present interactive elements identifying the repository, code file, and portion of the code file; and based on receipt of user input to the interactive element identifying the portion of the code file, present a graphical representation of the portion.

Clause 6. The method of any preceding clause, wherein the development web application pushes messages to the assistant web application reflecting selections of code files and corresponding selections of portions of the code files, the portion identifying line numbers of the code files.

Clause 7. The method of any preceding clause, wherein the portion of code includes reference to a dataset or a data object type, wherein the indication of context includes information identifying the dataset or the data object type, wherein the back-end system obtains metadata reflecting a schema associated with the dataset or an ontology definition associated with the data object type.

Clause 8. Non-transitory computer storage media storing instructions that when executed by one or more processors, cause the one or more processors to perform operations comprising: causing presentation, via an assistant web application and a development web application executing in a browser, of a first window and a second window, the assistant web application and the development web application being in communication with a back-end system; establishing communications, via a communication channel, between the assistant web application and the development web application, the communication channel identifying interactions with the development web application; obtaining, via the assistant web application, a user prompt and an indication of context to be included in a large language model (LLM) prompt, wherein the user prompt and indication of context is routed to the back-end system, wherein the indication of context is specified based on user input provided to the first window reflecting attachment of one or more of a repository, a code file accessible in the second window, or a portion of the code file, wherein the back-end system is in communication with an LLM, wherein the back-end system obtains the code associated with the attachment, and wherein the back-end system forms the LLM prompt based on the user prompt, the obtained code, and metadata determined by the back-end system; and triggering a response from the LLM and updating the first window to reflect the response.

Clause 9. The computer storage media of clause 8, wherein the second window is configured to respond to user input to select the portion of the code file, and wherein based on receipt of the user input, the development web application transmits a message to the assistant web application reflecting selection of the portion.

Clause 10. The computer storage media of clause 8 or clause 9, wherein the assistant web application presents selectable options associated with attachments, the selection options including a first selectable option to attach the repository, a second selectable option to attach the code file, and a third selectable option to select the portion of the code file.

Clause 11. The computer storage media of any of clauses 8-10, wherein the communication channel is broadcast channel.

Clause 12. The computer storage media of any of clauses 8-11, wherein the first window is configured to: present interactive elements identifying the repository, code file, and portion of the code file; and based on receipt of user input to the interactive element identifying the portion of the code file, present a graphical representation of the portion.

Clause 13. The computer storage media of any of clauses 8-12, wherein the development web application pushes messages to the assistant web application reflecting selections of code files and corresponding selections of portions of the code files, the portion identifying line numbers of the code files.

Clause 14. The computer storage media of any of clauses 8-13, wherein the portion of code includes reference to a dataset or a data object type, wherein the indication of context includes information identifying the dataset or the data object type, wherein the back-end system obtains metadata reflecting a schema associated with the dataset or an ontology definition associated with the data object type.

Clause 15. A system comprising one or more processors and compute storage media storing instructions that when executed by the one or more processors, cause the one or more processors to perform the method of any of clauses 8-14.

Clause 16. A method implemented by a system of one or more processors executing program instructions, the method comprising: obtaining, from a user device, a user prompt and an indication of context, wherein the system executes back-end functionality associated with an assistant web application and a development web application, wherein the user device presents front-ends associated with the assistant web application and the development web application, wherein the user prompt reflects a question provided to the assistant web application and wherein the indication of context reflects attachment of a repository, a code file being viewed via the development application, or a portion of the code file; determining metadata associated with the context, wherein the system obtains code associated with the indication of context and determines metadata based on the obtained code; forming a large language model (LLM) prompt based on the user prompt, obtained code, and determined metadata, wherein the LLM prompt is provided to an LLM; and routing output from the LLM to the user device for inclusion in the front end associated with the assistant web application.

Clause 17. The method of clause 16, wherein the indication of context includes a reference to a database storing the repository or code file.

Clause 18. The method of clause 16 or clause 17, wherein the obtained code includes code that forms the repository, code that forms the code file, and/or code that forms the portion of the code file, the portion reflecting one or more lines selected based on user input provided to the development web application.

Clause 19. The method of any of clauses 16-18, wherein the portion of code includes reference to one or more datasets, and wherein the system obtains metadata reflecting individual schemas associated with the one or more datasets.

Clause 20. The method of any of clauses 16-19, wherein the portion of code includes reference to a data object type associated with an ontology, and wherein the system obtains metadata reflecting an ontology definition associated with the data object type.

Clause 21. The method of any of clauses 16-20, wherein the metadata includes header files or implementation examples associated with the portion of code.

Clause 22. A system comprising one or more processors and compute storage media storing instructions that when executed by the one or more processors, cause the one or more processors to perform the method of any of clauses 16-21.

Clause 23. Non-transitory computer storage media storing instructions that when executed by one or more processors, cause the one or more processors to perform the method of any of clauses 16-21.

## Claims

1. A method implemented by one or more processors executing program instructions, the method comprising:
causing presentation, via an assistant web application and a development web application executing in a browser, of a first window and a second window, the assistant web application and the development web application being in communication with a back-end system;
establishing communications, via a communication channel, between the assistant web application and the development web application, the communication channel identifying interactions with the development web application;
obtaining, via the assistant web application, a user prompt and an indication of context to be included in a large language model (LLM) prompt, wherein the user prompt and indication of context is routed to the back-end system, wherein the indication of context is specified based on user input provided to the first window reflecting attachment of one or more of a repository, a code file accessible in the second window, or a portion of the code file,
wherein the back-end system is in communication with an LLM, wherein the back-end system obtains the code associated with the attachment, and wherein the back-end system forms the LLM prompt based on the user prompt, the obtained code, and metadata determined by the back-end system;
and
triggering a response from the LLM and updating the first window to reflect the response.

2. The method of claim 1, wherein the second window is configured to respond to user input to select the portion of the code file, and wherein based on receipt of the user input, the development web application transmits a message to the assistant web application reflecting selection of the portion.

3. The method of claim 1 or claim 2, wherein the assistant web application presents selectable options associated with attachments, the selection options including a first selectable option to attach the repository, a second selectable option to attach the code file, and a third selectable option to select the portion of the code file.

4. The method of any preceding claim, wherein the communication channel is broadcast channel.

5. The method of any preceding claim, wherein the first window is configured to:
present interactive elements identifying the repository, code file, and portion of the code file; and
based on receipt of user input to the interactive element identifying the portion of the code file, present a graphical representation of the portion.

6. The method of any preceding claim, wherein the development web application pushes messages to the assistant web application reflecting selections of code files and corresponding selections of portions of the code files, the portion identifying line numbers of the code files.

7. The method of any preceding claim, wherein the portion of code includes reference to a dataset or a data object type, wherein the indication of context includes information identifying the dataset or the data object type, wherein the back-end system obtains metadata reflecting a schema associated with the dataset or an ontology definition associated with the data object type.

8. A system comprising one or more processors and compute storage media storing instructions that when executed by the one or more processors, cause the one or more processors to perform the method of any of claims 1-7.

9. A method implemented by a system of one or more processors executing program instructions, the method comprising:
obtaining, from a user device, a user prompt and an indication of context, wherein the system executes back-end functionality associated with an assistant web application and a development web application, wherein the user device presents front-ends associated with the assistant web application and the development web application,
wherein the user prompt reflects a question provided to the assistant web application and wherein the indication of context reflects attachment of a repository, a code file being viewed via the development application, or a portion of the code file;
determining metadata associated with the context, wherein the system obtains code associated with the indication of context and determines metadata based on the obtained code;
forming a large language model (LLM) prompt based on the user prompt, obtained code, and determined metadata, wherein the LLM prompt is provided to an LLM; and
routing output from the LLM to the user device for inclusion in the front-end associated with the assistant web application.

10. The method of claim 9, wherein the indication of context includes a reference to a database storing the repository or code file.

11. The method of claim 9 or claim 10, wherein the obtained code includes code that forms the repository, code that forms the code file, and/or code that forms the portion of the code file, the portion reflecting one or more lines selected based on user input provided to the development web application.

12. The method of any of claims 9-11, wherein the portion of code includes reference to one or more datasets, and wherein the system obtains metadata reflecting individual schemas associated with the one or more datasets.

13. The method of any of claims 9-12, wherein the portion of code includes reference to a data object type associated with an ontology, and wherein the system obtains metadata reflecting an ontology definition associated with the data object type.

14. The method of any of claims 9-13, wherein the metadata includes header files or implementation examples associated with the portion of code.

15. A system comprising one or more processors and compute storage media storing instructions that when executed by the one or more processors, cause the one or more processors to perform the method of any of claims 9-14.
